# EUROPEAN PATENT SPECIFICATION

(11) **EP 2 232 026 B1**
(45) Date of publication and mention of the grant of the patent: **15.08.2012**
(21) Application number: 08860228.9
(22) Date of filing: 10.12.2008
(51) Int. Cl.: F01P 3/20, F01P 11/04, F16H 57/04

(54) **COOLING SYSTEM FOR MOTOR VEHICLE**
KÜHLSYSTEM FÜR KRAFTFAHRZEUG
SYSTEME DE REFROIDISSEMENT POUR VEHICULE AUTOMOBILE

(30) Priority: 13.12.2007 SE 0750006
(43) Date of publication of application: 29.09.2010
(73) Proprietor: Scania CV AB (PUBL), 151 87 Södertälje (SE)
(72) Inventor: GÖRAS, Erik, S-171 44 Solna (SE); DAHLBÄCK, Mårten, S-181 61 Lidingö (SE)
(86) International application number: PCT/SE2008/051430
(87) International publication number: WO 2009/075639

(56) References cited:
- DE-U1-202004 018 136
- US-B1- 6 196 168
- US-B1- 6 684 827
- US-B2- 6 536 381

## Description

### TECHNICAL FIELD

The invention relates to a cooling system for a motor vehicle according to the preamble of claim 1. The invention relates also to a motor vehicle according to claim 8.

### BACKGROUND

Cooling a cooling medium of drive devices of a motor vehicle, such as gearboxes and universal joints, is effected according to examples of the state of the art by leading the cooling medium, e.g. oil, from the drive device, e.g. the gearbox, through pipes to a heat exchanger arranged in the vehicle's front grille, whereby the cooling medium is cooled by air during operation of the vehicle and is led back in order to be reused for cooling purposes. Such heat exchange takes place by means of cooling medium, such as oil, at various locations in the vehicle, e.g. at the engine/crankshaft, in a differential gear etc. Accordingly, a number of cooling lines are laid around in the vehicle.

A problem with such cooling lines in vehicles is that they sometimes leak oil, leading to increased fire hazard. Engines for motor vehicles, particularly trucks, are tending to become larger and larger with higher and higher powers. The engines thus take up more space in vehicles, which may result in problems in finding space for other components in the vehicle. The need to cool the oil also increases with increased engine power, and achieving sufficient cooling of the oil can be a problem with solutions according to the state of the art.

The space requirement can be reduced and the fire risk diminished by arranging a heat exchanger close to, for example, the gearbox and supplying it with a cooling medium other than oil, e.g. water. However, this entails solutions which have to be adapted to the design of the gearbox, whereas gearboxes of vehicles vary entailing expensive integration.

Document US668482781 shows a cooling system for a motor vehicle comprising a cooling circuit for providing a unit of the vehicle, which unit in operation is warmed, with cooling by a cooling medium flowing in the cooling circuit. The cooling system comprises a pump for circulating the cooling medium in the cooling circuit, and means for handling the circulating cooling medium.

### OBJECT OF THE INVENTION

An object of the present invention is to propose a cooling system for a motor vehicle which makes both more reliable cooling and compact construction possible and is cost-effective.

### SUMMARY OF THE INVENTION

This and other objects indicated by the description set out below are achieved by a cooling system and a vehicle as above which further have the features indicated in the characterising parts of the attached independent claims 1 and 8. Preferred embodiments of the cooling system are defined in the attached dependent claims 2-7.

According to the invention, these objects are achieved with a cooling system for a motor vehicle comprising a cooling circuit for cooling a unit of the vehicle, which unit in operation is warmed by a cooling medium flowing in the cooling circuit, which cooling system comprises means for circulating the cooling medium in the cooling circuit, and means for handling the circulating cooling medium, characterised by a modular configuration comprising said means and adapted to being connected to the unit at an interface in order to circulate the cooling medium between the unit and the modular configuration.

The result is a more reliable cooling system in that in cases, for example, where oil is used as cooling medium the fire risk decreases because the risk of leakage is minimised. A further result is a compact solution in which the means for handling the cooling medium, e.g. a heat exchanger, are arranged close to the unit of the vehicle which is to be cooled, e.g. the gearbox or the engine. The fact that the modular configuration comprises the means for handling the cooling medium, and the interface, makes it possible to use similar modular configurations for cooling the various different drive units, thereby reducing the range of articles and hence the costs, since they need not be made in a plurality of different models. A further advantage is that various different modular configurations can be connected at the same interface, making it possible for a simpler modular configuration which occupies a relatively small amount of space to be connected when the vehicle is, for example, used only for low loading, whereas a more complicated modular configuration may be used for a similar vehicle and/or similar drive unit or other vehicles.

According to an embodiment, the modular configuration comprises an intermediate element for supporting said means and for connection to the interface. This results in an effective way of connecting the modular configuration at the interface and for arranging said handling means in this context.

According to an embodiment, said means comprise a filter adapted to filtering the cooling medium in the cooling circuit. This is particularly advantageous where the cooling medium is oil, whereby the oil is filtered.

According to an embodiment, said means comprise a thermostat and a heat exchanger, which thermostat is adapted, depending on the temperature of the cooling medium, to leading the cooling medium either through the heat exchanger for cooling or past the heat exchanger. This is an effective way of only cooling the cooling medium when necessary.

According to an embodiment, said means comprises a bypass valve adapted to reacting to a certain pressure of the cooling medium by leading the cooling medium back to the unit in a bypass line. This provides safety on the occasion of, for example, cold starts of the vehicle, so that means for handling the cooling medium, e.g. a heat exchanger, are protected. It also avoids the risk of bursting of any oil filters fitted.

According to an embodiment, said means comprise at least one sensor, e.g. a temperature sensor, whereby said at least one sensor is preferably adapted to communicating with the vehicle's electronic control unit. Information about the cooling medium, e.g. its temperature, can thus be obtained. This makes it possible to control means for handling the cooling medium. It also makes it possible to act upon/limit the loading of the vehicle, e.g. to reduce the power of the engine temporarily in order, for example, to lower the oil temperature of the gearbox when so desired.

According to an embodiment, said unit comprises a gearbox, in which case oil is normally used as cooling medium.

According to an embodiment, said unit comprises an engine, in which case water is normally used as cooling medium.

According to an embodiment, said unit comprises a rear axle, in which case oil is normally used as cooling medium.

According to an embodiment, said cooling medium comprises oil, the characteristics of which make it a very effective cooling medium, e.g. at gearwheel engagement points in a gearbox and at bearings.

### DESCRIPTION OF THE DRAWINGS

The present invention will be better understood with reference to the following detailed description read together with the attached drawings, in which the same reference notations refer to similar items throughout the various drawings, in which:
Fig. 1 depicts schematically a cooling system for a motor vehicle according to the present invention;
Fig. 2 depicts schematically a cooling system according to an embodiment of the present invention for cooling the vehicle's engine;
Fig. 3 depicts schematically a cooling system according to an embodiment of the present invention for cooling the gearbox of a vehicle intended for running with low loading;
Fig. 4 depicts schematically a cooling system according to an embodiment of the present invention for cooling the gearbox of a vehicle intended for running with high loading, and
Fig. 5 depicts a variant of the cooling system according to Fig. 4 for cooling a gearbox.

### DESCRIPTION OF EMBODIMENTS

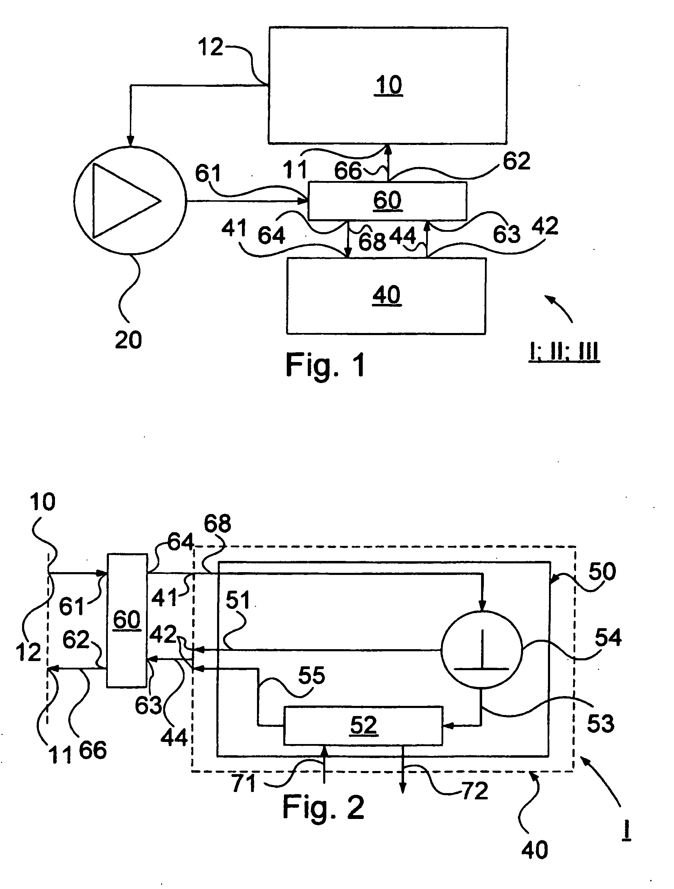

Fig. 1 depicts schematically a cooling system I; II; III for a motor vehicle according to the present invention. The cooling system comprises a cooling circuit for providing a unit of the motor vehicle, in the form of a drive unit 10 which is warmed during operation, with cooling by a medium flowing in the cooling circuit, a pump 20 for circulating the cooling medium in the cooling circuit, a modular configuration 40 comprising means for handling the cooling medium, and a interface 60 configured to be associated with the unit 10 and further configured to accommodate the modular configuration 40. The interface 60 is therefore arranged between the unit 10 and the modular configuration 40.

The pump 20 may be arranged in or close to, or be integrated with, the drive unit 10. The pump 20 is adapted to pumping the cooling medium in the cooling circuit. The pump 20 is adapted to pumping the cooling medium from the drive unit 10 to the modular configuration 40 via the interface 60. The pump 20 is further adapted to pumping the cooling medium through the modular configuration 40 via said handling means back to the drive unit 10 via the interface 60 in order to cool the drive unit 10.

The interface 60 has a first inlet 61 which is connected to the drive unit 10 and through which the cooling medium from the drive unit 10 is intended to flow. The interface 60 has a second inlet 63 connected to an outlet 42 of the modular configuration 40 via a line 44, whereby the cooling medium is intended to flow from the outlet 42 of the modular configuration 40, through the line 44 and in through the second inlet 63 of the interface 60.

The interface 60 has a first outlet 62 connected to an inlet 11 of the drive unit 10 via a line 66, whereby the cooling medium is intended to flow from the first outlet 62 of the interface 60, through the line 66 and in through the inlet 11 of the drive unit 10. The interface 60 has a second outlet 64 connected to an inlet 41 of the modular configuration 40 via a line 68, whereby the cooling medium is intended to flow from the second outlet 64, through the line 68 to the inlet 41 of the modular configuration 40.

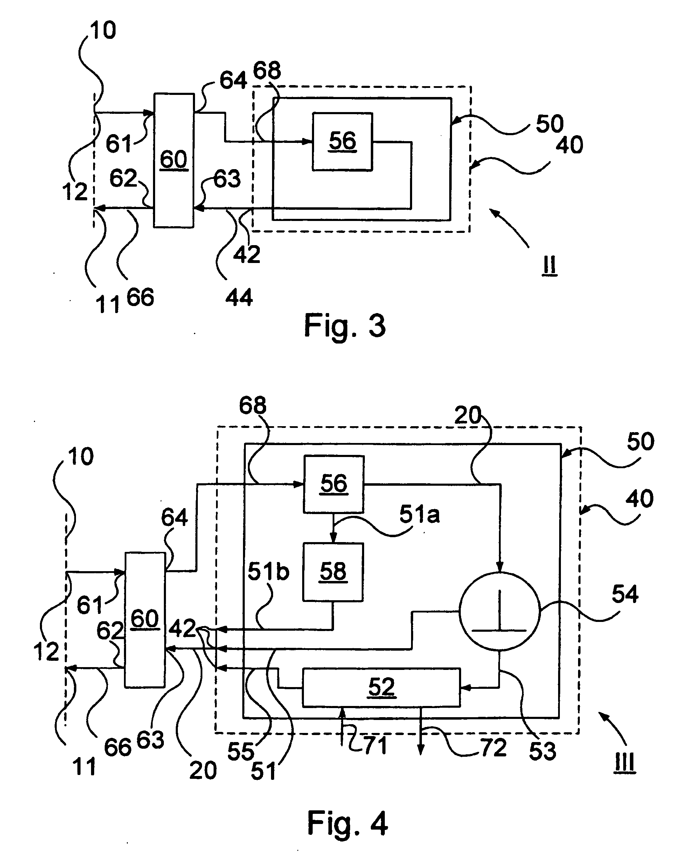

The interface 60 is so configured that it can be fitted to various different drive units 10 of the vehicle, which drive unit 10 according to Fig. 1 may take the form of an engine 10, see Fig. 2, gearbox 10, see Figs. 3 and 4, and rear axle 10.

The interface 60 is so configured that it can accommodate a modular configuration 40. The interface 60 constitutes a fastening point to which the modular configuration 40 is adapted to being fastened. The interface 60 has a fixed geometry, i.e. a defined/geometric layout. The interface 60 constitutes a connection which is used as mechanical suspension for the modular configuration 40. The interface 60 is thus a mechanical fastening point through which cooling medium is intended to be led out from and back to the drive unit 10.

The modular configuration 40 comprises means for handling the cooling medium, and an intermediate element 50 to which said means is adapted, as illustrated by Figs. 2, 3, 4 and 5. Said means may, depending on drive unit, cooling medium etc., comprise a heat exchanger 52, filter 56, thermostat 54, bypass valve 58, temperature sensor and similar means for handling the cooling medium, see Figs. 2, 3, 4 and 5. The modular configuration is interchangeable and can be replaced by a modular configuration 40 with similar handling means or other handling means.

The intermediate element has integrated ducts or lines for the cooling medium/cooling media.

Fig. 2 depicts schematically a cooling system I according to an embodiment of the present invention for cooling a drive unit 10 of the vehicle, which unit according to this embodiment takes the form of the vehicle's engine 10. The cooling system comprises the interface 60 connected to the engine 10, and the modular configuration 40 connected to the interface 60. The interface 60 is in fluid communication with the engine 10, whereby the cooling medium is intended to be led into and out from the engine 10. The interface 60 is also in fluid communication with the modular configuration 40.

The modular configuration 40 comprises the intermediate element 50, a heat exchanger 52 adapted to cooling the cooling medium, and a thermostat 54 adapted to directing the cooling medium, as necessary, either through the heat exchanger 52 in order to cool the cooling medium or past the heat exchanger 52.

The heat exchanger 52 and the thermostat 54 are connected to the intermediate element 50 in such a way that cooling medium warmed by the engine 10 is allowed to flow in ducts/lines of the intermediate element 50 via the thermostat 54 and on through the heat exchanger 52 and/or past the heat exchanger 52, and back through the inlet of the interface 60 to the engine 10.

The cooling medium is thus intended to flow from an outlet 12 of the engine 10, in through the inlet 61 and out through the outlet 64 of the interface 60 and on through a line 68 towards the thermostat 54. At times when the temperature of the cooling medium is below a certain temperature, e.g. during normal operation of the vehicle, the thermostat is adapted to leading the cooling medium back to the engine 10 through a bypass line 51, whereby the cooling medium is intended to pass out through the outlet 42 of the modular configuration 40 and via the line 44 in through the inlet 63 and out through the outlet 62 of the interface 60 before it flows in through the inlet 11 of the engine 10.

At times when the temperature of the cooling medium is above a certain temperature, e.g. when there is high loading of the vehicle, the thermostat is adapted to allowing the cooling medium to pass towards the heat exchanger 52 through a line 53 and in through the heat exchanger 52 in which it is cooled. The cooled cooling medium is intended to flow out from the heat exchanger in a line 55 whereby the cooling medium is intended to pass out through the outlet 42 of the modular configuration 40 and via the line 44 in through the inlet 63 and out through the outlet 62 of the interface 60 before it flows in through the inlet 11 of the engine 10.

The heat exchanger 52 is adapted to cooling the cooling medium flowing through it by means of a second cooling medium which is intended to flow into the heat exchanger 52 through a first line 71, whereby it is intended to flow within the heat exchanger 52 in such a way as to result in heat exchange with the cooling medium, and is thereafter intended to flow out from the heat exchanger 52 through a second line 72 to be led on in order to be cooled by cooling means.

According to a variant, the cooling medium is water which may contain additives for lowering its freezing point and which is intended to cool the engine in the latter's cooling ducts. Alternatively, the cooling medium is oil, in which case a filter for filtering the oil is also preferably arranged upstream of the thermostat.

According to a variant, the second cooling medium is also water.

According to an alternative variant, the second cooling medium is air. The heat exchanger 52 with air cooling of water comprises an electric motor adapted to pressurising of air. An advantage of a heat exchanger which uses air as second cooling medium is that the risk of leakage decreases. However, such a heat exchanger device requires more space than a heat exchanger which uses water as second cooling medium.

According to a further variant, the second cooling medium is freon.

Fig. 3 depicts schematically a cooling system II according to an embodiment of the present invention for cooling a drive unit 10 of the vehicle, which unit according to this embodiment takes the form of the vehicle's gearbox 10 intended for running with low loading. The cooling system II comprises the interface 60 connected to the gearbox 10, and the modular configuration 40 connected to the interface 60. The interface 60 is in fluid communication with the gearbox 10, whereby the cooling medium is intended to be led into and out from the gearbox 10. The interface 60 is also in fluid communication with the modular configuration 40.

The modular configuration 40 comprises the intermediate element 50 and a filter 56 for filtering the cooling medium which flows through the modular configuration 40. The filter 56 is connected to the intermediate element 50 in such a way that cooling medium which flows through a duct 68 of the intermediate element 50 is filtered by the filter 56, which cooling medium is led back through a duct 44 of the intermediate element 50 to the gearbox 10 via the interface 60, i.e. out through the outlet 42 of the modular configuration 40 and in through the inlet 63 and out through the outlet 62 of the interface 60 and in through the inlet 11 of the gearbox 10.

The cooling medium for cooling the gearbox 10 takes preferably the form of oil. The filter 56 is therefore adapted to filtering the oil. Oil is available in the form of an oil sump in the bottom of the gearbox 10 whereby the oil is intended to cool gearwheels which are brought into engagement during rotation, bearings and the like of the gearbox 10. The oil is intended to be pumped by the pump 20 from the oil sump through the interface 60 and on through the modular configuration 40 where the oil is intended to be filtered by the filter 56 and thereafter be led back to the gearbox 10 via the interface 60.

This modular configuration 40 has no cooling and is intended to be installed in vehicles which are not subject to heavy loading, e.g. trucks which carry light goods on roads where there are no extreme gradients or the like and hence no extra cooling of the oil is required. An advantage of such a modular configuration is that it occupies less space and reduces the installing, component and maintenance costs.

Fig. 4 depicts schematically a cooling system III according to an embodiment of the present invention for cooling a drive unit 10 of the vehicle, which unit according to this embodiment takes the form of the vehicle's gearbox 10 intended for running with high loading. The cooling system comprises the interface 60 connected to the gearbox 10, and the modular configuration 40 connected to the interface 60. The interface 60 is in fluid communication with the gearbox 10 whereby the cooling medium is intended to be led into and out from the gearbox 10. The interface 60 is also in fluid communication with the modular configuration 40.

The modular configuration 40 comprises the intermediate element 50, a filter for filtering the cooling medium, a bypass valve 58 for leading the cooling medium past when it is at a certain pressure, a heat exchanger 52 adapted to cooling the cooling medium, a thermostat 54 adapted to directing the cooling medium, as necessary, either through the heat exchanger 52 in order to cool the cooling medium or past the heat exchanger 52.

The heat exchanger 52 and the thermostat 54 are connected to the intermediate element 50 in such a way that cooling medium warmed by the engine 10 is allowed to flow in ducts/lines of the intermediate element 50 via the thermostat 54 and on through the heat exchanger 52 and/or through a bypass line past the heat exchanger 52, and back through the inlet of the interface 60 to the engine 10. The general function of the heat exchanger/thermostat is equivalent to the function of the heat exchanger/thermostat in cooling system I as described with reference to Fig. 2.

The filter 56 is connected to the intermediate element 50 in such a way that cooling medium which flows through a duct 68 of the intermediate element 50 is filtered by the filter 56. According to a variant, the filter 56 is arranged upstream of the heat exchanger 52/thermostat 54.

The bypass valve 58 is connected to the intermediate element 50 in such a way that the cooling medium is led past the heat exchanger/thermostat when the cooling medium is at a certain pressure. According to a variant, the bypass valve 58 is arranged downstream of the filter 56.

The heat exchanger 52 is adapted to cooling the cooling medium flowing through it by means of a second cooling medium which is intended to flow into the heat exchanger 52 through a first line 71, whereby it is intended to flow within the heat exchanger 52 in such a way as to result in heat exchange with the cooling medium, and is thereafter intended to flow out from the heat exchanger 52 through a second line 72 to be led on in order to be cooled by cooling means, in accordance with the function of cooling system I according to Fig. 2.

The cooling medium for cooling the gearbox 10 takes preferably the form of oil. Oil is available in the form of an oil sump in the bottom of the gearbox 10 whereby the oil is intended to cool gearwheels which are brought into engagement during rotation, bearings and the like of the gearbox 10.

The oil is intended to be pumped by the pump 20 from the oil sump through the interface 60 and on through a first line 68 in the modular configuration 40 through the filter 56, in which the oil is intended to be filtered.

During normal operation, the thermostat 54 is adapted to leading the oil past the heat exchanger 52 in a first bypass line 51 and it is thereafter led back to the gearbox 10 via the interface 60.

During operation at high loading when the oil in the gearbox 10 is at a certain higher temperature due to friction, the thermostat 54 is adapted to leading the oil through the heat exchanger 52, in which the oil is intended to be cooled by a second cooling medium. The oil is thereafter intended to be led back to the gearbox 10 to cool the gearbox.

During operation on the occasion of so-called cold starts or the like when high pressure rises occur, e.g. when there are very low ambient temperatures, the oil may congeal. To safeguard, for example, the heat exchanger 52 when the oil begins to run sluggishly and risks clogging up, the oil is intended to be led past through the bypass valve 58 via a bypass line 51 a and 51 b, which bypass valve 58 is adjustable so that it can be set according to the pressure of the oil, and the oil is led back to the gearbox 10. According to a variant, the bypass valve is provided with a spring which keeps the valve closed at normal pressure but which allows it to open when the cooling medium, e.g. oil, reaches a certain higher pressure so that the force acting upon the spring is greater than the spring's own force.

According to a variant, the second cooling medium is water.

According to an alternative variant, the second cooling medium is air. The heat exchanger 52 with air cooling of water comprises an electric motor adapted to pressurising of air. An advantage of a heat exchanger which uses air as second cooling medium is that the risk of leakage decreases. However, such a heat exchanger device requires more space than a heat exchanger which uses water as second cooling medium.

According to a further variant, the second cooling medium is freon.

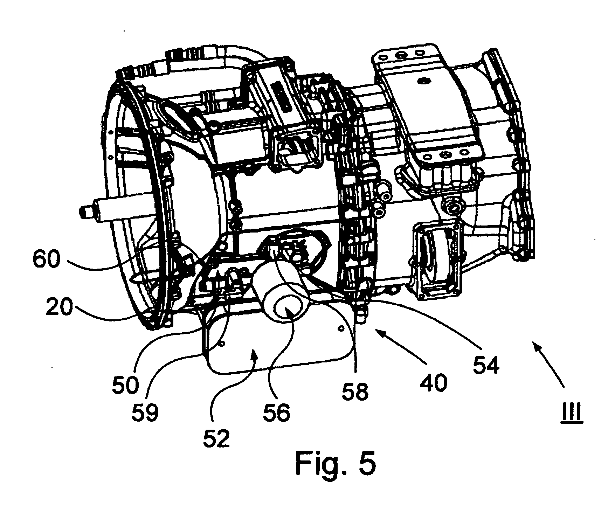

Fig. 5 depicts a variant of the cooling system according to Fig. 4 for cooling a gearbox. The cooling system comprises the interface 60 connected to the gearbox 10, and the modular configuration 40 connected to the interface 60. The interface 60 is in fluid communication with the gearbox 10, whereby oil is intended to be led into and out from the engine 10. The interface 60 is also in fluid communication with the modular configuration 40.

The modular configuration 40 comprises an intermediate element, a filter for filtering the cooling medium, a bypass valve for leading the cooling medium past when it is at a certain pressure, a heat exchanger adapted to cooling the cooling medium, a thermostat adapted to directing the cooling medium, as necessary, either through the heat exchanger 52 in order to cool the cooling medium or past the heat exchanger 52. The modular configuration 40 comprises also a temperature sensor 59 adapted to supplying the vehicle's control system with information about the current situation. The filter 56, the bypass valve, the heat exchanger 52, the thermostat 54 and the temperature sensor are all arranged on the intermediate element 50. The intermediate element 50 is connected to the interface 60.

According to this variant, the heat exchanger 52 is a plate heat exchanger comprising a number of plates stacked on one another so that spaces are formed between the plates, whereby oil is intended to flow within one set of alternate spaces and water within the other set of alternate spaces, so that the oil is cooled by the water.

Embodiments of cooling systems I, II, III according to the invention are described above. The modular configuration 40 according to those embodiments is only an example and may comprise other components such as sensors etc. The modular configurations as above may also be connected to various different drive units of a vehicle, whereby the interface constitutes a fastening point.

According to an embodiment of the invention, the form of the interface 60 is the same for various different drive units 10 such as gearbox, engine, rear axle etc. This affords the advantage that similar modular configurations can be used for cooling the various different drive units 10, thereby reducing the range of articles and hence the costs, since they need not be made in a plurality of different models.

A further advantage is that various different modular configurations 40 can be used so that on the same vehicle/drive unit different modular configurations 40 can be connected to the same interface 60, whereby a simpler modular configuration 40 which occupies a relatively small amount of space, e.g. that according to embodiment II according to Fig. 3, which is only intended for oil filtering, can be connected when the vehicle is only used for low loading, whereas in the case of a similar vehicle and/or similar drive unit or another vehicle a more complicated modular configuration, e.g. that according to embodiment III according to Fig. 4, which is intended for filtering and cooling and has a safety valve 58, can be connected when the vehicle is used for high loading.

According to an alternative embodiment, the cooling medium is intended to be led from the drive unit past the interface 60 to the modular configuration 40 and back from the modular configuration 40 past the interface and back into the drive unit 10 for cooling. In this case, the interface 60 constitutes a fastening point for the modular configuration 40, whereby the drive unit 10 according to Fig. 1 may take the form of any desired suitable unit of a motor vehicle which requires cooling, e.g. an engine 10 according to the embodiment in Fig. 2, gearbox 10 according to the embodiments in Figs. 3 and 4, or rear axle 10 according to a variant covered by Fig. 1, which modular configuration may incorporate any desired suitable handling means, including the handling means 52, 54, 56, 58, 59 in accordance with embodiments I, II, III above.

The invention is thus not to be regarded as limited to the embodiments indicated above but may be varied within its scope indicated by the attached claims.

## Claims

1. A cooling system for a motor vehicle comprising a cooling circuit for providing a unit (10) such as a gearbox or a rear axle of the vehicle, which unit in operation is warmed, with cooling by a cooling medium flowing in the cooling circuit, which cooling system comprises a pump (20) for circulating the cooling medium in the cooling circuit, and means for handling the circulating cooling medium, wherein the means for handling the cooling medium being dependent on inter alia cooling medium and may comprise heat exchanger (52), filter (56), thermostat (54), bypass line (51; 51 a, 51 b), bypass valve (58), **characterised by** a modular configuration (40) comprising said means (51, 51 a, 51 b, 52, 54, 56, 58) and adapted to being connected to the unit (10) at an interface (60), said interface (60) being arranged to accommodate said modular configuration (40), wherein said interface (60) is formed as a fastening point to which the modular configuration (40) may be fastened irrespective of which of said means (51, 51 a, 51 b, 52, 54, 56, 58) being part of the modular configuration (40), and form a connection which is used as mechanical suspension for said modular configuration (40), in order to circulate the cooling medium between the unit (10) and the modular configuration (40), wherein said unit (10) comprises an inlet (11) and an outlet (12), said interface (60) comprises a first inlet (61), a second inlet (63), a first outlet (62) and a second outlet (64), and said modular configuration (40) comprises an inlet (41) and an outlet (42), where the outlet (12) of the unit is connected with the first inlet (61) of the interface, the second outlet (64) of the interface is connected with the inlet (41) of the modular configuration, the outlet (42) of the modular configuration is connected with the second inlet (63) of the interface, and the first outlet (62) of the interface is connected with the inlet (11) of the unit, and thereby allow flow of said cooling medium between the unit (10) and the modular configuration (40) through the interface (60).

2. A cooling system according to claim 1, in which the modular configuration (40) comprises an intermediate element (50) for supporting said means (51, 51 a, 51 b, 52, 54, 56, 58) and for connection to the interface (60), wherein said intermediate element (50) comprises integrated ducts or lines to allow flow of cooling medium between said unit (10) and the said means (51, 51 a, 51 b, 52, 54, 56, 58) included in the modular configuration (40).

3. A cooling system according to claim 1 or 2, in which said means comprise a filter (56) adapted to filtering the cooling medium in the cooling circuit.

4. A cooling system according to any one of the foregoing claims, in which said means comprise a thermostat (54) and a heat exchanger (52), which thermostat (54) is adapted to leading the cooling medium, depending on the temperature of the cooling medium, either through the heat exchanger (52) for cooling or past the heat exchanger (52).

5. A cooling system according to any one of the foregoing claims, in which said means comprise a bypass valve (58) adapted to reacting to a certain pressure of the cooling medium by leading the cooling medium back to the unit in a bypass line (51 b).

6. A cooling system according to any one of the foregoing claims, in which said means comprise at least one sensor (59), e.g. a temperature sensor (59), said at least one sensor preferably being adapted to communicating with the vehicle's electronic control unit.

7. A cooling system according to any one of the foregoing claims, in which said cooling medium comprises oil.

8. A motor vehicle comprising a cooling system according to any one of claims 1-7.

## Patentansprüche

1. Kühlsystem für ein Kraftfahrzeug, welches einen Kühlkreislauf umfasst zum Versorgen einer Einheit (10), beispielsweise einem Getriebe oder einer Hinterachse des Fahrzeugs, die sich im Betrieb erwärmt, mit Kühlung durch ein im Kühlkreislauf fließendes Kühlmedium, wobei das Kühlsystem eine Pumpe (20) zum Zirkulieren des Kühlmediums im Kühlreiskauf umfasst und Mittel zum Handhaben des Kühlmediums, wobei die Mittel zum Handhaben des Kühlmediums unter anderem vom Kühlmedium abhängen und einen Wärmetauscher (52), einen Filter (56), einen Thermostat (54), eine Bypass-Leitung (51, 51a, 51b), ein Bypass-Ventil (58) umfassen können, **gekennzeichnet durch** eine modulare Konfiguration (40), welche die Mittel (51, 51a, 51b, 52, 54, 56, 58) umfasst und dazu eingerichtet ist, um an die Einheit (10) an einer Schnittstelle (60) angeschlossen zu werden, wobei die Schnittstelle (60) dazu ausgeführt ist, um die modulare Konfiguration (40) aufzunehmen und wobei die Schnittstelle (60) als Befestigungspunkt ausgebildet ist, an dem die modulare Konfiguration (40) befestigt werden kann, unabhängig davon, welche der Mittel (51, 51a, 51b, 52, 54, 56, 58) Teil der modularen Konfiguration (40) sind, und um eine Verbindung herbeizuführen, die als mechanische Aufhängung für die modulare Konfiguration (40) genutzt wird, um das Kühlmedium zwischen der Einheit (10) und der modularen Konfiguration (40) zu zirkulieren, wobei die Einheit (10) einen Einlass (11) und einen Auslass (12) aufweist, wobei die Schnittstelle (60) einen ersten Einlass (61) und einen zweiten Einlass (63), einen ersten Auslass (62) und einen zweiten Auslass (64) aufweist, und wobei die modulare Konfiguration (40) einen Einlass (41) und einen Auslass (42) aufweist, wobei der Auslass (12) der Einheit mit dem ersten Einlass (61) der Schnittstelle verbunden ist, wobei der zweite Auslass (64) der Schnittstelle verbunden ist mit dem Einlass (41) der modularen Konfiguration, der Auslass (42) der modularen Konfiguration verbunden ist mit dem zweiten Einlass (63) der Schnittstelle, und der erste Auslass (62) der Schnittstelle verbunden ist mit dem Einlass (11) der Einheit, und **dadurch** das Fließen des Kühlmediums zwischen der Einheit (10) und der modularen Konfiguration (40) **durch** die Schnittstelle (60) ermöglicht wird.

2. Kühlsystem nach Anspruch 1,
bei dem die modulare Konfiguration (40) ein Zwischenelement (50) zum Stützen der Mittel (51, 51a, 51b, 52, 54, 56, 58) umfasst und zum Anschluss an die Schnittstelle (60), wobei das Zwischenelement (50) integrierte Kanäle oder Leitungen umfasst, um das Fließen des Kühlmediums zwischen der Einheit (10) und den Mitteln (51, 51a, 51b, 52, 54, 56, 58) zu ermöglichen, die in der modularen Konfiguration (40) enthalten sind.

3. Kühlsystem nach Anspruch 1 oder 2,
bei dem die Vorrichtungen einen Filter (56) umfassen, der dazu eingerichtet ist, um das Kühlmedium im Kühlkreislauf zu filtern.

4. Kühlsystem nach einem der vorhergehenden Ansprüche,
bei dem die Vorrichtungen einen Thermostat (54) und einen Wärmetauscher (52) umfassen und der Thermostat (54) dazu eingerichtet ist, um das Kühlmedium in Abhängigkeit von der Temperatur des Kühlmediums entweder durch den Wärmetauscher (52) zum Kühlen zu leiten oder am Wärmetauscher (52) vorbei.

5. Kühlsystem nach einem der vorhergehenden Ansprüche,
bei dem die Vorrichtungen ein Bypass-Ventil (58) umfassen, welches eingerichtet ist, um auf einen bestimmten Druck des Kühlmediums zu reagieren, indem das Kühlmedium in einer Bypass-Leitung (51b) zurück zur Einheit geleitet wird.

6. Kühlsystem nach einem der vorhergehenden Ansprüche,
bei dem die Vorrichtungen mindestens einen Sensor (59) umfassen, beispielsweise einen Temperatursensor (59), wobei dieser mindestens eine Sensor vorzugsweise für eine Kommunikation mit der elektronischen Steuereinheit des Fahrzeugs eingerichtet ist.

7. Kühlsystem nach einem der vorhergehenden Ansprüche,
bei dem das Kühlmedium Öl enthält.

8. Kraftfahrzeug, das ein Kühlsystem nach einem der Ansprüche 1 bis 7 aufweist.

## Revendications

1. Système de refroidissement pour un véhicule à moteur comprenant un circuit de refroidissement pour fournir à une unité (10), telle qu'une boîte de vitesse ou un essieu arrière du véhicule, laquelle unité chauffe pendant son fonctionnement, un refroidissement par un fluide de refroidissement circulant dans le circuit de refroidissement, lequel système de refroidissement comprend une pompe (20) pour faire circuler le fluide de refroidissement dans le circuit de refroidissement, et des moyens pour la prise en charge du fluide de refroidissement en circulation, lesquels moyens pour la prise en charge du fluide de refroidissement dépendent entre autres du fluide de refroidissement et peuvent comprendre un échangeur de chaleur (52), un filtre (56), un thermostat (54), une conduite de dérivation (51 ; 51a, 51b), une soupape de dérivation (58), **caractérisé par** une configuration modulaire (40) comprenant lesdits moyens (51, 51a, 51 b, 52, 54, 56, 58) et apte à être connectée à l'unité (10) au niveau d'une interface (60), interface (60) qui est agencée de façon à recevoir ladite configuration modulaire (40), laquelle interface (60) est formée à la manière d'un point de fixation sur lequel peut être fixée la configuration modulaire (40), quels que soit ceux desdits moyens (51, 51a, 51b, 52, 54, 56, 58) qui font partie de la configuration modulaire (40), et forme une liaison qui peut être utilisée en tant que suspension mécanique pour ladite configuration modulaire (40), afin de faire circuler le fluide de refroidissement entre l'unité (10) et la configuration modulaire (40), ladite unité (10) comprenant un entrée (11) et une sortie (12), ladite interface (60) comprenant une première entrée (61), une deuxième entrée (63), une première sortie (62) et une deuxième sortie (64), et ladite configuration modulaire (40) comprenant une entrée (41) et une sortie (42), où la sortie (12) de l'unité est connectée à la première entrée (61) de l'interface, la deuxième sortie (64) de l'interface est connectée à l'entrée (41) de la configuration modulaire, la sortie (42) de la configuration modulaire est connectée à la deuxième entrée (63) de l'interface, et la première entrée (62) de l'interface est connectée à l'entrée (11) de l'unité, ce qui permet la circulation dudit fluide de refroidissement entre l'unité (10) et la configuration modulaire (40) en passant par l'interface (60).

2. Système de refroidissement selon la revendication 1, dans lequel la configuration modulaire (40) comprend un élément intermédiaire (50) destiné à supporter lesdits moyens (51, 51a, 51b, 52, 54, 56, 58) et à la connexion à l'interface (60), ledit élément intermédiaire (50) comprenant des conduites ou lignes intégrées pour permettre la circulation du fluide de refroidissement entre ladite unité (10) et lesdits moyens (51, 51a, 51 b, 52, 54, 56, 58) inclus dans la configuration modulaire (40).

3. Système de refroidissement selon la revendication 1 ou 2, dans lequel lesdits moyens comprennent un filtre (56) apte à filtrer le fluide de refroidissement dans le circuit de refroidissement.

4. Système de refroidissement selon l'une quelconque des revendications précédentes, dans lequel lesdits moyens comprennent un thermostat (54) et un échangeur de chaleur (52), lequel thermostat (54) est apte à envoyer le fluide de refroidissement, selon la température du fluide de refroidissement, soit vers l'échangeur de chaleur (52) pour qu'il y soit refroidit, soit au-delà de l'échangeur de chaleur (52).

5. Système de refroidissement selon l'une quelconque des revendications précédentes, dans lequel lesdits moyens comprennent une soupape de dérivation (58) apte à réagir à une certaine pression du fluide de refroidissement en renvoyant le fluide de refroidissement à l'unité par une ligne de dérivation (51b).

6. Système de refroidissement selon l'une quelconque des revendications précédentes, dans lequel lesdits moyens comprennent au moins un capteur (59), par exemple un capteur de température (59), ledit au moins un capteur étant de préférence apte à communiquer avec l'unité de commande électronique du véhicule.

7. Système de refroidissement selon l'une quelconque des revendications précédentes, dans lequel ledit fluide de refroidissement comprend de l'huile.

8. Véhicule à moteur comprenant un système de refroidissement selon l'une quelconque des revendications 1 à 7.
